# EUROPEAN PATENT APPLICATION

(11) **EP 4 074 224 A1**
(43) Date of publication of application: **19.10.2022**
(21) Application number: 21863606.6
(22) Date of filing: 31.08.2021
(51) Int. Cl.: A47G 27/02, B32B 27/02

(54) **WASHABLE AND NON-DEFORMABLE THREE-DIMENSIONAL INTERLAYER COMPOSITE CARPET**

(30) Priority: 02.09.2020 CN 202010910768
(71) Applicant: Kunshan Yijia Ju Textile Co., Ltd., Kunshan, Jiangsu 215345 (CN)
(72) Inventor: CAO, Shunlin, Jiangsu 215345 (CN)
(74) Representative: Bayramoglu et al.
(86) International application number: PCT/CN2021/115735
(87) International publication number: WO 2022/048542

(57) **Abstract**

The present invention provides a washable nondeformable composite carpet with a three-dimensional interlayer, comprising a surface layer, a three-dimensional interlayer and an antiskid layer. The three-dimensional interlayer comprises an upper layer made from a knitted fabric, a lower layer made from a knitted fabric, and a composite filament connecting layer arranged vertically in the middle and connecting the upper layer and the lower layer. The composite carpet with the three-dimensional interlayer of a composite filament connecting structure features great support force and high ductility, and can be folded repeatedly for more than 1000 times. The washing shrinkage of the composite carpet washed for 10 times is not greater than 2%. The composite carpet will not become deformed under conditions of being extruded for a long time, heated and affected with damp.

## Description

### TECHNICAL FIELD

The present invention relates to carpets in the textile industry, particularly to a washable nondeformable composite carpet with a three-dimensional interlayer.

### BACKGROUND

At present, a 3D spatial mesh fabric in the market is a mesh fabric woven by a double warp knitting machine and includes mesh surfaces, connecting monofilaments and a bottom surface of plan cloth, thereby forming a three-dimensional mesh fabric structure thereof. A middle connecting layer thereof can be in various shapes, including tubular shape, pleated shape and other shapes, so that the three-layered fabric has a very wide application prospect. Usually, filaments of upper and lower surfaces are polyester monofilaments, and a middle connecting filament is also a polyester monofilament.

At present, domestic carpets are substantially unable to be cleaned, and part of the washable carpets is subjected to dry cleaning. The carpet is over 9 kg in weight, a washing machine cannot bear it and it is unable to be put in the washing machine as the carpet is too large, which is one of the major reasons that families are reluctant to use the carpet. The carpet applying the 3D mesh fabric in the market is deformed under conditions of being extruded for a long time, heated and affected with damp, which results in a short service life. Furthermore, in a washing process in which a common 3D mesh fabric is put in the washing machine or a water channel after being folded, under the actions of a water flow, a mechanical frictional force and the temperature, the monofilament of the middle connecting layer will incline irregularly, so that there are depressions on the surface, the fabric is likely to be pleated, the edge of the fabric is unable to be aligned with the ground, and it is difficult to pave the fabric, and therefore, a risk of stumbling personnel is generated.

Therefore, an environmental-friendly carpet capable of being totally recycled is needed. The carpet not only has the functions of a conventional carpet, but also can be folded and washed arbitrarily by a user and is unlikely to generate deformation, so that the service life of the carpet is prolonged.

It is found by searching for current patent literatures that a Chinese utility model patent with application No.: 201220471847.4 discloses a composite carpet with a permeable structure, including a carpet body, where the carpet body is divided into three layers of structures from a surface layer to a bottom slayer, the middle layer is a sponge layer, and the surface layer and the bottom layer both are mesh fabric layers. This carpet is necessarily used by connecting and combining a base body layer with a connecting layer, resulting in high cost and inconvenience in use. Furthermore, the base body layer and the connecting layer are likely to be connected insecurely and generate a sliding risk. In addition, there will be obvious pleats after the carpet is folded and put in the washing machine to be washed and cannot be aligned with the ground. After the middle sponge layer is washed, the weight of the carpet is increased due to strong water absorption of sponge, so that the washing machine is unable to bear the weight of the carpet. Moreover, when people walk on this carpet, sounds that make people feel uncomfortable will be made as a result of mutual friction of monofilaments of the top surface and the bottom surface that connect the base body layer.

### SUMMARY

The objective of the present invention is to provide a washable nondeformable composite carpet with a three-dimensional interlayer. An antiskid layer of the composite carpet can be folded arbitrarily and washed and is unlikely to deform under a condition that an elastic substance or a fabric with the density within 1 kg/m² and the thickness not greater than 2 cm, thereby satisfying the current requirement of people who can fold the carpet and put it in the washing machine to be washed.

The objective of the present invention is realized by the following technical solution:
The present invention relates to a washable nondeformable composite carpet with a three-dimensional interlayer, including a surface layer, a three-dimensional interlayer and an antiskid layer, where the three-dimensional interlayer comprises an upper layer, a lower layer a composite filament connecting layer arranged vertically in the middle and connecting the upper layer and the lower layer.

As an embodiment of the present invention, in the composite filament connecting layer, a composite filament connecting the upper layer and the lower layer is a polyester, a polypropylene fiber or a nylon composite filament.

As an embodiment of the present invention, in the composite filament connecting layer, a composite filament connecting the upper layer and the lower layer is 48D-1200D.

As an embodiment of the present invention, a thickness of the three-dimensional interlayer is 1.5-5 mm.

As an embodiment of the present invention, the upper layer and the lower layer are knitted fabric layers, respectively.

As an embodiment of the present invention, the knitted fabric layers are monofilament knitted fabric layers (the knitted fabric layers include monofilaments).

As an embodiment of the present invention, the monofilament is a 20D-100D polyester, a 20D-100D polypropylene fiber or a 20D-100D nylon monofilament.

As an embodiment of the present invention, a thickness of the antiskid layer is 0.1-20 mm.

As an embodiment of the present invention, the antiskid layer is a thermoplastic elastomer layer (TPE, TPU and TPR), a hot melt adhesive layer, a plastic sheeting, PVC gridding cloth, a foaming adhesive layer and an EVA layer, or other fabrics with antiskid functions.

As an embodiment of the present invention, the there-dimensional interlayer is of an integrated structure.

As an embodiment of the present invention, the three-dimensional interlayer is of the integrated structure obtained by weaving the monofilaments of the upper layer and the lower layer and the composite filament connecting the upper layer and the lower layer through a double warp knitting machine.

As an embodiment of the present invention, the three-dimensional interlayer weaved to the integrated structure is obtained by subjecting the integrated structure to high-temperature setting at 80-230°C. The three-dimensional interlayer is obtained by subjecting the upper layer, the lower layer and the composite filament connecting layer arranged vertically in the middle and connecting the upper layer and the lower layer to high-temperature setting at 80-230°C. Specifically, it is the three-dimensional interlayer obtained by weaving the 48D-1200D composite filament and the 20D-100D monofilaments into the integrated structure through the double warp knitting machine and subjecting the integrated structure to high-temperature setting at 80-230°C.

As an embodiment of the present invention, the surface layer is a carpet surface layer or a surface layer formed by compounding the carpet surface and the functional fabric, where the functional fabric is located between the carpet surface and the three-dimensional interlayer. Preferably, the functional fabric is a waterproof permeable membrane.

Compared with the prior art, the present invention has the following beneficial effects:
1. The composite carpet with the three-dimensional interlayer of a composite filament connecting structure provided by the present invention features great support force and high ductility, and can be folded repeatedly for more than 1000 times. The washing shrinkage of the composite carpet washed for 10 times is not greater than 2%.
2. The composite carpet with the three-dimensional interlayer of a composite filament connecting structure provided by the present invention will not become deformed under conditions of being extruded for a long time, heated and affected with damp.
3. According to the composite carpet with the three-dimensional interlayer of a composite filament connecting structure provided by the present invention, the composite filament in the composite filament connecting layer does not incline irregularly after the carpet is washed for 10 times, and the surface of the carpet is free of obvious depressions and pleats.
4. The fabric with the antiskid function can be arranged below the three-dimensional interlayer of the composite carpet of the present invention as the antiskid layer, so that the carpet has a good antiskid function and plays roles of protecting the ground and enhancing sound isolation as well.

### BRIEF DESCRIPTION OF DRAWINGS

By reading and referring to detailed description made by the following drawings to non-restrictive embodiments, other features, purposes and advantages of the present invention will become more obvious.
FIG. 1 is a structural schematic diagram of a three-dimensional interlayer.
FIG. 2 is a structural schematic diagram of a cut pile composite carpet with a three-dimensional interlayer.
FIG. 3 is a structural schematic diagram of a loop-pile composite carpet with a three-dimensional interlayer.
FIG. 4 is a structural schematic diagram of a plain woven composite carpet with a three-dimensional interlayer.
FIG. 5 is a structural schematic diagram of a carpet surface and a three-dimensional interlayer added with functional fabrics in the middle.

In the drawings, 1-upper layer made from knitted fabric; 2-composite filament connecting layer; 3-lower layer made from knitted fabric; 4-cut pile layer; 5-base fabric layer; 6-antiskid layer; 7-loop-pile layer; 8-plain woven fabric layer; 9-functional fabric.

### DETAILED DESCRIPTION OF EMBODIMENTS

Description of the present invention in detail will be made below in combination with embodiments. The embodiments below contribute to further understanding the present invention by those skilled in the art but do not limit the present invention in any form. It is to be noted that variations and improvements still can be made by those skilled in the art without departing the concept of the present invention. These fall into the protection scope of the present invention.

### Embodiment 1

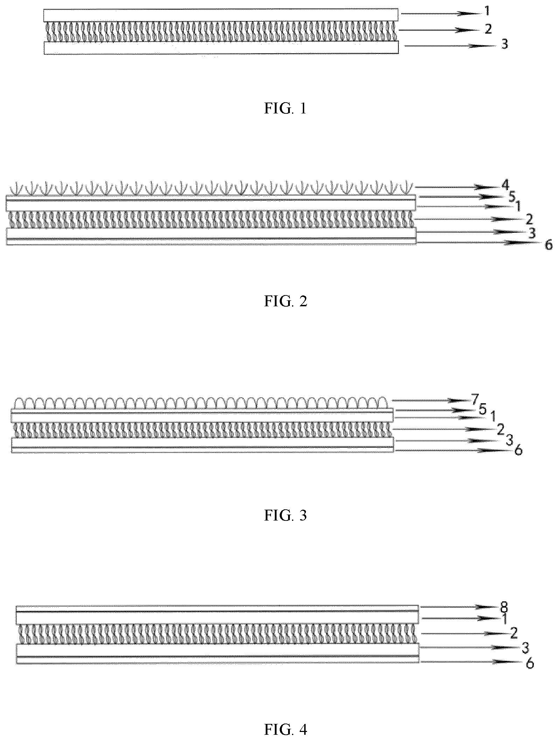

The embodiment relates to a composite carpet with a three-dimensional interlayer, as shown in FIG. 3, including:
a surface layer including a loop-pile layer 7 and a basic fabric layer 5, a three-dimensional interlayer including an upper layer 1 made from a knitted fabric, a composite filament connecting layer 2 and a lower layer 3 made from a knitted fabric, and an antiskid layer 6.

In the surface layer, a pile face was woven by a 2400D doubled yarn on a long fiber base fabric through a tufting and loop-piling process, with a pile height of 5 mm.

In the three-dimensional interlayer, as shown in FIG. 1, it included the upper layer 1 made from a knitted fabric, the lower layer 3 made from a knitted fabric and the composite filament connecting layer 2 arranged vertically in the middle and connecting the upper layer and the lower layer. A thickness of the three-dimensional interlayer was 5 mm. A warp-weft density of each of the knitted fabrics of the upper layer and the lower layer of the three-dimensional interlayer was 3mm^{∗}3mm.

In the embodiment, a threading pattern with two threads and eight drop stitches was adopted by using the double warp knitting machine to weave. Surface materials of the upper and lower layers were 30D polyester monofilaments. A material arranged vertically in the middle and connecting the upper and lower layers was a polyester DTY composite filament (specification: 300D/576F), namely, a composite filament, with a coarseness of 300D, combined by 576 monofilaments. The two materials were jointly woven into a three-dimensional interlayer fabric. The three-dimensional interlayer fabric subjected to high-temperature setting at 160°C was small in shrinkage and was kept elastic as well.

The surface layer and the three-dimensional interlayer fabric were bonded by using a water-resistant PUR hot melt adhesive.

The antiskid layer was an SEBS hot melt adhesive layer. Specifically, composite antiskid treatment was conducted on the bottom of the three-dimensional interlayer fabric by using the SEBS hot melt adhesive, where a thickness of the antiskid layer was 0.1 mm, and an amount of the adhesive was 20 g/m².

### Embodiment 2

The embodiment relates to a composite carpet with a three-dimensional interlayer, as shown in FIG. 2, including:
a surface layer including a cut pile layer 4 and a basic fabric layer 5, a three-dimensional interlayer including an upper layer 1 made from a knitted fabric, a composite filament connecting layer 2 and a lower layer 3 made from a knitted fabric, and an antiskid layer 6.

In the surface layer, a pile face was woven by a 1200D doubled yarn on a PP network yarn base fabric through a tufting and cut-piling process, with a pile height of 6mm.

A thickness of the three-dimensional interlayer was 3mm. A warp-weft density of each of the knitted fabrics of the upper layer and the lower layer of the three-dimensional interlayer was 3mm^{∗}2.5mm.

In the embodiment, a threading pattern with three threads and six drop stitches was adopted by using the double warp knitting machine to weave. Surface materials of the upper and lower layers were 60D polyester monofilaments. A material arranged vertically in the middle and connecting the upper and lower layers was a polyester DTY composite filament (specification: 150D/144F), namely, a composite filament, with a coarseness of 150D, combined by 144 monofilaments. The three-dimensional interlayer fabric subjected to high-temperature setting at 180°C was small in shrinkage and was kept elastic as well.

The surface layer and the three-dimensional interlayer fabric were compounded by using a TPE laminating process.

The antiskid layer was a TPE layer. Specifically, TPE with SHORE 45°C was laminated and coated to the bottom of the three-dimensional interlayer after being molten through the laminating process to form the antiskid layer. A thickness of the antiskid layer was 0.5 mm, and an amount of the adhesive was 350 g/m².

### Embodiment 3

The embodiment relates to a composite carpet with a three-dimensional interlayer, as shown in FIG. 4, including:
a surface layer (a plain woven fabric layer 8, can also be a knitted fabric layer), a three-dimensional interlayer including an upper layer 1 made from a knitted fabric, a composite filament connecting layer 2 and a lower layer 3 made from a knitted fabric, and an antiskid layer 6.

In the surface layer, the plain woven fabric layer can be woven by using a jacquard weaving chenille fabric weaving process.

A thickness of the three-dimensional interlayer was 2mm.A warp-weft density of each of the knitted fabrics of the upper layer and the lower layer of the three-dimensional interlayer was 3mm^{∗}2.5mm.

In the embodiment, a threading pattern with three threads and six drop stitches was adopted by using the double warp knitting machine to weave. Surface materials of the upper and lower layers were 20D polyester monofilaments. A material arranged vertically in the middle and connecting the upper and lower layers was a polyester DTY composite filament (specification: 300D/96F), namely, a composite filament, with a coarseness of 300D, combined by 96 monofilaments. The three-dimensional interlayer fabric subjected to high-temperature setting at 120°C was small in shrinkage and was kept elastic as well.

The woven fabric layer and the three-dimensional interlayer fabric were compounded by using a TPE laminating process.

The antiskid layer was a plastic non-woven fabric layer 5. Specifically, the plastic non-woven fabric and the bottom of the three-dimensional interlayer were bonded by using the laminating process. A thickness of the antiskid layer was 3mm.

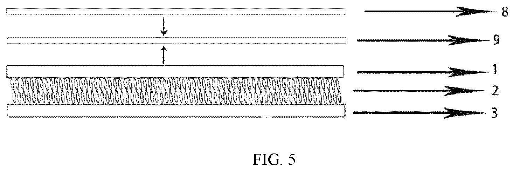

As a variable example of the embodiment, as shown in FIG. 5, the surface layer included a plain woven fabric layer 8 and a functional fabric 9, where the functional fabric 9 was a waterproof permeable membrane and was bonded between the plain woven fabric layer 8 and the upper layer 1 made from knitted fabric of the three-dimensional interlayer through a hot melt adhesive.

### Comparative example 1

The comparative example relates to a composite carpet with a three-dimensional interlayer, substantially identical to embodiment 2. The difference is merely as follows:
The three-dimensional interlayer included an upper layer made from a knitted fabric, a monofilament connecting layer and a lower layer made from a knitted fabric.

In the comparative example, a threading pattern with three threads and six drop stitches was adopted by using the double warp knitting machine to weave. Surface materials of the upper and lower layers were 60D polyester monofilaments. A material arranged vertically in the middle and connecting the upper and lower layers was a polyester monofilament (specification: 150D). The two materials are jointly woven into the three-dimensional interlayer. The three-dimensional interlayer fabric was subjected to high-temperature setting at 180°C.

### Performance verification

### 1. Washing test comparative verification

Experimental conditions: a carpet with a size smaller than 140^{∗}200 cm was taken, was washed for 30 min in a domestic washing machine with power of 480W, dehydrated for 10 min, and tested under a condition that a drying temperature was 70°C.

A composite carpet with a size of 140^{∗}200 cm was prepared according to application No.: 201220471847.4.As the middle layer was a sponge layer, it was increased in weight after absorbing water, so that the washing machine could not bear the carpet. The middle monofilaments subjected to extrusion and immersion inclined irregularly, so that the surfaces had depressions and pleats. The post-drying shrinkage of the immersed carpet in a damp state was 2.5%.

The composite carpet with the size of 140^{∗}200 cm of the comparative example 1 was taken. It was found after washing that the monofilaments of the three-dimensional interlayer inclined irregularly, and the surface and back of the carpet had slight depressions and pleats. The post-drying shrinkage of the washed carpet in a damp state was 1.8%. The washing shrinkage after the carpet was washed and dried repeatedly for 10 times was 2.06%, and at the moment, the surface and back of the carpet had obvious depressions and pleats. It took 30 min to dry the carpet every time.

The loop-pile composite carpet with the three-dimensional interlayer with the size of 140^{∗}200 cm in the embodiment 1 was taken. The surface and back of the washed carpet had no obvious depressions and pleats, and the periphery thereof was aligned with the ground. The post-drying shrinkage of the washed carpet in a damp state was 1.25%. The washing shrinkage after the carpet was washed and dried repeatedly for 10 times was 1.5%, and at the moment, the surface and back of the carpet still had no depressions, and the periphery was aligned with the ground. The composite filaments in the three-dimensional interlayer did not incline. It took 30 min to dry the carpet every time.

The cut pile composite carpet with the three-dimensional interlayer with the size of 140^{∗}200 cm in the embodiment 2 was taken. The surface and back of the washed carpet had no obvious depressions and pleats, and the periphery thereof was aligned with the ground. The post-drying shrinkage of the washed carpet in a damp state was 1.15%. The washing shrinkage after the carpet was washed and dried repeatedly for 10 times was 1.4%, and at the moment, the surface and back of the carpet still had no depressions, and the periphery was aligned with the ground. The composite filaments in the three-dimensional interlayer did not incline. It took 40 min to dry the carpet every time.

The woven chenille composite carpet with the three-dimensional interlayer with the size of 140^{∗}200 cm in the embodiment 3 was taken. The surface and back of the washed carpet had no obvious depressions and pleats, and the periphery thereof was aligned with the ground. The post-drying shrinkage of the washed carpet in a damp state was 1.5%. The washing shrinkage after the carpet was washed and dried repeatedly for 10 times was 1.95%, and at the moment, the surface and back of the carpet still had no depressions. The composite filaments in the three-dimensional interlayer did not incline. It took 40 min to dry the carpet every time.

### 2. Folding effect comparative verification

A composite carpet with a size of 100^{∗}100 cm was prepared according to application No.: 201220471847.4. It was folded irregularly at an environment temperature of 50°C and environment humidity of 90% (a condition that cargoes passed through the equator in sea transportation was simulated), the folded part was pressed with 50 KG weight, and after the weight was moved in 24 h and the carpet was flattened. The surface and back of the carpet had no obvious depressions and pleats, part of area of the bottom surface was unable to be laid flat, part of pleats in the back portion was somewhat improved after it was flattened and placed for 24 h, but part of areas of the surface and back of the carpet still had obvious plaques, depressions and pleats.

A composite carpet with a size of 100^{∗}100 cm of the comparative example 1 was taken. It was folded irregularly at an environment temperature of 50°C and environment humidity of 90% (a condition that cargoes passed through the equator in sea transportation was simulated), the folded part was pressed with 50 KG weight, and after the weight was moved in 24 h and the carpet was flattened. The surface and back of the carpet had obvious plaques, depressions and pleats, part of area of the bottom surface was unable to be laid flat, part of pleats in the back portion was somewhat improved after it was flattened and placed for 24 h, but part of areas of the surface and back of the carpet still had obvious plaques, depressions and pleats.

A loop-pile composite carpet with the three-dimensional interlayer with a size of 100^{∗}100 cm in the embodiment 1 was taken. It was folded irregularly at an environment temperature of 50°C and environment humidity of 90% (a condition that cargoes passed through the equator in sea transportation was simulated), the folded part was pressed with 50 KG weight, and after the weight was moved in 24 h and the carpet was flattened. The surface rebounded quickly, and part of areas had slight pleats and creases. The periphery of the carpet slightly upwarped relative to the ground. The surface and back of the carpet flattened and placed for 24 h had no obvious creases, pleats and plaques, and the periphery thereof was aligned with the ground.

A cut pile composite carpet with the three-dimensional interlayer with a size of 100^{∗}100 cm in the embodiment 2 was taken. It was folded irregularly at an environment temperature of 50°C and environment humidity of 90% (a condition that cargoes passed through the equator in sea transportation was simulated), the folded part was pressed with 50 KG weight, and after the weight was moved in 24 h and the carpet was flattened. The surface rebounded quickly, and part of areas had slight pleats and creases. The periphery of the carpet slightly upwarped relative to the ground. The surface of the carpet flattened and placed for 24 h had no obvious creases and pleats, and the periphery thereof was aligned with the ground.

A jacquard weaving chenille composite carpet with the three-dimensional interlayer with a size of 100^{∗}100 cm in the embodiment 3 was taken. It was folded irregularly at an environment temperature of 50°C and environment humidity of 90% (a condition that cargoes passed through the equator in sea transportation was simulated), the folded part was pressed with 50 KG weight, and after the weight was moved in 24 h and the carpet was flattened. The surface rebounded quickly, and part of areas had slight pleats and creases. The surface of the carpet flattened and placed for 24 h had no obvious creases and pleats, and the periphery thereof was aligned with the ground.

In conclusion, the present invention provides a washable nondeformable composite carpet with a three-dimensional interlayer. Furthermore, it is not limited to the above embodiments. The carpet surface layer of the present invention can be a fabric woven by various processes such as a loop-pile fabric, a cut pile fabric, a woven fabric and a knitted fabric which can be used as a fabric for the carpet. The three-dimensional interlayer can be woven into various patterns, with strong supporting force and high ductility, combined by 48D-1200D polyester composite filaments and 20-100D monofilaments. The bottom layer can be compounded with antiskid materials such as a thermoplastic elastomer (for example, TPE, TPU and EVA), a hot melt adhesive, a foaming adhesive, EVA and a plastic sheeting, so that the antiskid property, the elasticity and the sound isolating function of the composite carpet are improved. The surface layer, the three-dimensional interlayer and the antiskid layer are combined together tightly by using a thermoplastic elastomer material (TPE, TPU, EVA and the like), the hot melt adhesive and a bonding material insoluble in water through a hot-pressing process.

Description on specific embodiments of the present invention is made above. It is to be understood that the present invention is not limited to the specific embodiments, and those skilled in the art can made various variations or modifications within the scope of the claims without affecting the substantial contents of the present invention.

## Claims

1. A washable nondeformable composite carpet with a three-dimensional interlayer, comprising a surface layer, a three-dimensional interlayer and an antiskid layer, wherein the three-dimensional interlayer comprises an upper layer, a lower layer, and a composite filament connecting layer arranged vertically in the middle and connecting the upper layer and the lower layer.

2. The washable nondeformable composite carpet with a three-dimensional interlayer according to claim 1, wherein in the composite filament connecting layer, a composite filament connecting the upper layer and the lower layer is a polyester, a polypropylene fiber or a nylon composite filament.

3. The washable nondeformable composite carpet with a three-dimensional interlayer according to claim 1 or 2, wherein in the composite filament connecting layer, the composite filament connecting the upper layer and the lower layer is 48D-1200D.

4. The washable nondeformable composite carpet with a three-dimensional interlayer according to claim 1, wherein a thickness of the there-dimensional interlayer is 1.5-5 mm.

5. The washable nondeformable composite carpet with a three-dimensional interlayer according to claim 1, wherein the upper layer and the lower layer are monofilament knitted fabric layers, respectively, a monofilament being a 20D-100D polyester, a 20D-100D polypropylene fiber or a 20D-100D nylon monofilament.

6. The washable nondeformable composite carpet with a three-dimensional interlayer according to claim 1, wherein the surface layer is formed by compounding a carpet surface and a functional fabric, the functional fabric being located between the carpet surface and the three-dimensional interlayer.

7. The washable nondeformable composite carpet with a three-dimensional interlayer according to claim 1, wherein a thickness of the antiskid layer is 0.1-20 mm.

8. The washable nondeformable composite carpet with a three-dimensional interlayer according to claim 7, wherein the antiskid layer is a thermoplastic elastomer layer, a hot melt adhesive layer, a plastic sheeting, PVC gridding cloth, a foaming adhesive layer and an EVA layer.

9. The washable nondeformable composite carpet with a three-dimensional interlayer according to claim 1, wherein the there-dimensional interlayer is of an integrated structure.

10. The washable nondeformable composite carpet with a three-dimensional interlayer according to claim 1 or 9, wherein the three-dimensional interlayer is obtained by weaving the monofilaments of the upper layer and the lower layer and the composite filament connecting the upper layer and the lower layer through a double warp knitting machine and then subjecting the three-dimensional interlayer to high-temperature setting at 80-230°C.
